# EUROPEAN PATENT APPLICATION

(11) **EP 3 444 099 A1**
(43) Date of publication of application: **20.02.2019**
(21) Application number: 17186480.4
(22) Date of filing: 16.08.2017
(51) Int. Cl.: B29C 64/153, B29C 64/147, B22F 3/105

(54) **METHOD FOR ADDITIVELY MANUFACTURING OF THREE-DIMENSIONAL OBJECTS**

(71) Applicant: CL Schutzrechtsverwaltungs GmbH, 96215 Lichtenfels (DE)
(72) Inventor: Stammberger, Jens, 96472 Rödental (DE); Winiarski, Daniel, 96231 Bad Staffelstein (DE); Appel, Peter, 96047 Bamberg (DE)
(74) Representative: Hafner & Kohl

(57) **Abstract**

Method for additively manufacturing of three-dimensional objects (2) by means of successive layerwise selective irradiation and consolidation of layers of a build material (3) which can be consolidated by means of an energy beam (4), wherein at least one layer of build material (3) which is to be selectively irradiated and consolidated is at least partly provided as a foil-like planar element (12) of a build material (3) which can be consolidated by means of an energy beam (4).

## Description

The invention relates to a method for additively manufacturing of three-dimensional objects by means of successive layerwise selective irradiation and consolidation of layers of a build material which can be consolidated by means of an energy beam.

Methods for additively manufacturing of three-dimensional objects by means of successive layerwise selective irradiation and consolidation of layers of a build material which can be consolidated by means of an energy beam are generally known. Respective methods can be embodied as selective laser sintering processes, selective laser melting processes, or selective electron beam melting processes, for instance.

It is common that additively manufactured objects are built from only one type of build material since the use of at least two (chemically) different build materials, e.g. different metals, for additively manufacturing objects is difficult. This is to be reasoned on the fact that different build materials will be mixed during the additive manufacturing process and it is difficult to separate and recycle the build materials, for instance.

Yet, there is a demand for additively building-up three-dimensional objects from (chemically) different build materials, e.g. different metals, since this would further increase both the constructive and functional layout of additively manufactured three-dimensional objects and hence, the possibilities of additive manufacturing in general.

It is the object of the present invention, to provide an improved method for additively manufacturing of three-dimensional objects which allows for a practical use of a plurality of (chemically) different build materials.

The object is achieved by a method according to Claim 1. The dependent Claims refer to possible embodiments of the method.

The method described herein relates to additively manufacturing three-dimensional objects, e.g. technical components or component assemblies, by means of successive layerwise selective irradiation and accompanying consolidation of layers of at least one build material which can be consolidated by means of an energy beam. A respective build material can be a metal, ceramic or polymer, for instance. A respective energy beam can be a laser beam or an electronic beam, for instance. A respective method can be implemented as a selective laser sintering process, a selective laser melting process, or a selective electron beam melting process, for instance.

The method is characterized in that at least one layer of build material which is to be successively layerwise selectively irradiated and consolidated is at least partly provided as a foil-like planar element of a build material which can be consolidated by means of an energy beam. Hence, the method does not only comprise selectively irradiating and consolidating of layers of a powdered build material in order to additively build-up a respective three-dimensional object, but also comprises selectively irradiating and consolidating of layers of a non-powdered build material, i.e. a foil-like planar element made of a build material which can be consolidated by an energy beam, in order to additively build-up the respective three-dimensional object. As will be apparent from the following, the at least one layer of a foil-like planar element may be a layer at least partly constituting a part of the object to be additively manufactured according to the method or a may be a layer not constituting a part of the object ot be additively manufactured. In the latter case, the foil-like planar element can constitute a part of a support structure, the support structure being configured to support the object to be additively manufactured, on which the the object ot be additively manufactured is disposed.

Hence, the method uses at least two different kinds of build material which is to be successively layerwise selectively irradiated and consolidated, namely a powdered build material and a non-powdered build material. Both the layers or layer portions of powdered build material and the layers or layer portions of non-powdered build material can be consolidated by an energy beam. Layers of build material which are not provided as a foil-like planar element are typically, provided as a powder layer of a powdered build material and vice versa.

Compared with a powdered build material, e.g. a metal powder, a foil-like planar element can be deemed as a two-dimensional layer-like planar structural component which can be handled, i.e. particularly grabbed, by all kinds of handling devices, e.g. robots and the like.

Hence, during the additive build-up of the three-dimensional object according to execution, not only powder layers of build material are applied in the build plane and selectively irradiated, but also non-powder layers, i.e. foil-like planar elements, are arranged in the build plane and selectively irradiated and consolidated. With respect to a foil-like planar element, the term "consolidation" is typically, to be understood that the foil-like planar element is bonded or connected with other consolidated layers of build material building the three-dimensional object to be additively manufactured or with a build-platform of a build module. Thereby, the foil-like planar element is typically, selectively fused or melted by means of the selective irradiation and a firm bond or connection is built with other consolidated layers of build material building the three-dimensional object to be additively manufactured, i.e. in particular previously selectively irradiated and consolidated portions of a preceding layer of build material, or with a build-platform of a build module during subsequent cooling and solidification of the selectively fused or melted portions of the foil-like planar element. Thus, the foil-like planar element can be (directly) disposed on other consolidated layers of build material building the three-dimensional object to be additively manufactured, i.e. in particular previously selectively irradiated and consolidated portions of a preceding layer of build material, or on a build-platform, the build platform being typically moveably supported in at least one degree of freedom, of a build module. In the first case, the foil-like planar element constitutes a part of the object to be additively manufactured, in the second case, the foil-like planar element does not constitute a part of the object to be additively manufactured, buw may constitute a part of a support structure supporting the object to be additively manufactured.

A foil-like planer element which is to be selectively irradiated and consolidated can be (directly) arranged/disposed on top of at least one powdered build material layer which has been previously selectively irradiated and consolidated. Likewise, a powdered build material layer which is to be selectively irradiated and consolidated can be arranged on top of at least one foil-like planer element which has been previously selectively irradiated and consolidated. As will be apparent in the following, it is also possible that both a powdered build material and a foil-like element can be present and thus, also be irradiated and consolidated in the same build plane.

A foil-like planar element which is to be selectively irradiated and consolidated can also be (directly) arranged/disposed on top of a build platform of a build module. As mentioned before, the build platform is typically moveably supported in at least one degree of freedom, e.g. along a vertically orientated axis of motion. Hence, the foil-like planar element can be selectively irradiated and consolidated, whereby selectively irradiated and consolidated portions of the foil-like planar element are connected with a build platform of a build module. In this case, the foil-like planar element can act as a supporting structure for supporting the object which is to be additively manufactured. When the material properties, e.g. the mechanical and/or thermal properties, of the foil-like planar element differ from the material properties of the build platform, the foil-like planar element and the additively manufactured object built on top of the foil-like planar element can be easily removed from the build platform. In analogous manner, removal of a respective supporting structure from the object can be eased when the material properties, e.g. the mechanical and/or thermal properties, of the foil-like planar element differ from the material properties of the object to be additively manufactured.

A respective foil-like planar element may extend across the entire build plane which can be irradiated by the energy beam(s) used, i.e. the dimensions of the foil-like planar element may correspond to the dimensions of the build plane. However, it is also possible that the dimensions of the foil-like planar element may be smaller or bigger than the dimensions of the build plane. For the case that the dimensions of a foil-like planar element are smaller than the dimensions of the build plane, it is also possible that a plurality of foil-like planar elements are disposed in the build plane.

Generally, a foil-like planar element can be provided as a blank or cutting, e.g. as a blanked or stamped part, at least partly covering the build plane in which the selective irradiation and consolidation of build material takes place. In this regard, it is also conceivable that a respective blank or cutting is tailored, i.e. already has the cross-sectional shape of the cross-section of the three-dimensional object to be additively built in the respective plane or cross-section of the three-dimensional object to be additively manufactured.

The build material forming the foil-like planar element may be different compared with the build material which is not provided as foil-like planar element. Hence, a three-dimensional object which was manufactured in accordance with the method can be deliberately provided with locally differing object properties, e.g. locally differing electrical, mechanical, or thermal properties, by means of selective consolidation of different build materials. In such a manner, composite objects can be additively manufactured (without compromising the powdered build material). In this regard, it has to be mentioned that also the use of a plurality of foil-like planar elements which differ in at least one geometrical, chemical or physical property is conceivable allowing to additively built objects with special object properties, e.g. special electrical, mechanical, or thermal properties.

The energy beam used for consolidating respective layers or layer portions of powdered build material can have the same, similar or different energy beam properties, e.g. energy beam intensity, energy beam focus size, energy beam velocity, etc., as the energy beam used for consolidating respective layers or layer portions of non-powdered build material. Hence, the same, a similar or different energy beam can be used for consolidating layers or layer portions of powdered build material and layers or layer portions of non-powdered build material. Typically, geometrical, chemical and physical parameters, e.g. thickness, melting temperature, temperature of the foil-like planar element, etc. define the energy beam properties used for selectively irradiating and consolidating the foil-like planar element.

Using respective foil-like planar elements particularly, offers a practical solution for using (chemically) different build materials, whereby the application and mixing of different powdered build materials and the respective difficulties of separating and recycling of (chemically) different build materials can be avoided. Thus, the method meets the demand for additively building-up three-dimensional objects from (chemically and/or physically) different build materials, e.g. different metals; the method increases both the constructive and functional layout possibilities of additively manufacturing three-dimensional objects and hence, the possibilities of additive manufacturing in general. Thus, an improved method for additively manufacturing of three-dimensional objects which allows for a practical use of a plurality of different build materials is given.

A metal foil or a sheet metal can be used as a foil-like planar element. In other words, a respective foil-like planar element can be embodied as a metal foil or a sheet metal. Metal foils and sheet metal is available with a plurality of geometrical, chemical and physical properties, i.e. in a plurality of dimensions, thicknesses, materials, densities, etc., so that the use of metal foils or sheet metals allows for additively manufacturing of three-dimensional objects in a large variety of constructive and functional layouts. As an example, aluminum, copper, steel or titanium sheets or foils can be used as foil-like planar element.

In order to assure a proper additive build-up of a three-dimensional object, a respective foil-like planar element is typically, selectively irradiated and consolidated in such a manner that it bonds or connects with previously selectively irradiated and consolidated portions of a preceding layer of build material or a build platform of a build module. Hence, selectively irradiated and consolidated portions of the foil-like planar element are typically, bonded or connected with previously selectively irradiated and consolidated portions of a preceding layer of build material or a build platform. Bonding and connecting of a foil-like planar element with previously selectively irradiated and consolidated portions of a preceding layer of build material or a build platform typically, encompasses a material fit or material closure, respectively.

Portions of a foil-like planar element which do not form part of the three-dimensional object which is to be additively built, i.e. portions of a foil-like planar element which are not selectively irradiated and not consolidated, can be removed during and/or after selective irradiation and consolidation of the foil-like planar element. Removal of the respective portions of the foil-like planar element can be done by an appropriate handling device, e.g. a robot, which may cut and/or grasp the portions of the foil-like planar element which are to be removed. Removal of the respective portions of the foil-like planar element is typically, done before the next layer of build material, which can be a powdered build material layer or a non-powdered build material layer, is arranged in the build plane.

After removal of not selectively irradiated and not consolidated portions of a foil-like planar element, a powdered build material can be applied to areas from which the not selectively irradiated and not consolidated portions of the foil-like planar element have been removed. Hence, the free space(s) left after removing the respective portions of the foil-like planar element can be filled with a powdered build material so that both non-powdered build material and powdered build material is present in the same plane.

In such a manner, it is possible that a plane, i.e. typically a cross-section, of a three-dimensional object which was additively manufactured in accordance with the method comprises consolidated portions of a powdered build material and consolidated portions of a non-powdered build material. As mentioned above, powdered build material and a non-powdered build material can be (chemically) different materials so that it is generally possible that a plane of the three-dimensional object which was manufactured in accordance with the method comprises different object properties, e.g. different electrical, mechanical or thermal properties.

It was mentioned above that the foil-like planar element can be provided as a blank or cutting at least partly covering the build plane in which the selective irradiation and consolidation of build material takes place. Yet, it is also possible that the foil-like planar element can be provided from an endless supply or conveyor device supplying or conveying foil-like build material. The endless supply or conveyor device can be disposed within the process chamber of an additive manufacturing apparatus used for implementing the method. The endless supply or conveyor device can be moveably supported in at least one degree of freedom of motion so that it allows for arranging a foil-like planar element in the build plane. The energy beam used to selectively irradiate and consolidate build material can, if need be, also be used to cut distinct portions of foil-like material from the foil-like build material as supplied or conveyed from the endless supply or conveyor device.

In either case, a foil-like planar element may be provided in a pre-heated state. Pre-heating a foil-like planar element can improve the consolidation and bonding or connection with previously selectively irradiated and consolidated portions of a preceding layer of build material or a build platform, respectively.

The invention also relates to an additive manufacturing apparatus, i.e. an apparatus for additively manufacturing of three-dimensional objects by means of successive layerwise selective irradiation and consolidation of layers of a build material which can be consolidated by means of an energy beam. The apparatus is characterized in that it is configured to execute the method. Therefore, the apparatus may comprise a device, e.g. a handling device such as a robot or an endless supply or conveyor device, to arrange a foil-like planar element in the build plane. Generally, all annotations concerning the method apply mutatis mutandis to the apparatus.

Exemplary embodiments of the invention will be described with respect to the Fig., whereby
- Fig. 1 - 3: each show an additive manufacturing apparatus according to an exemplary embodiment; and
- Fig. 4: a top-view on the build plane of the apparatus of Fig. 1 or Fig. 2.

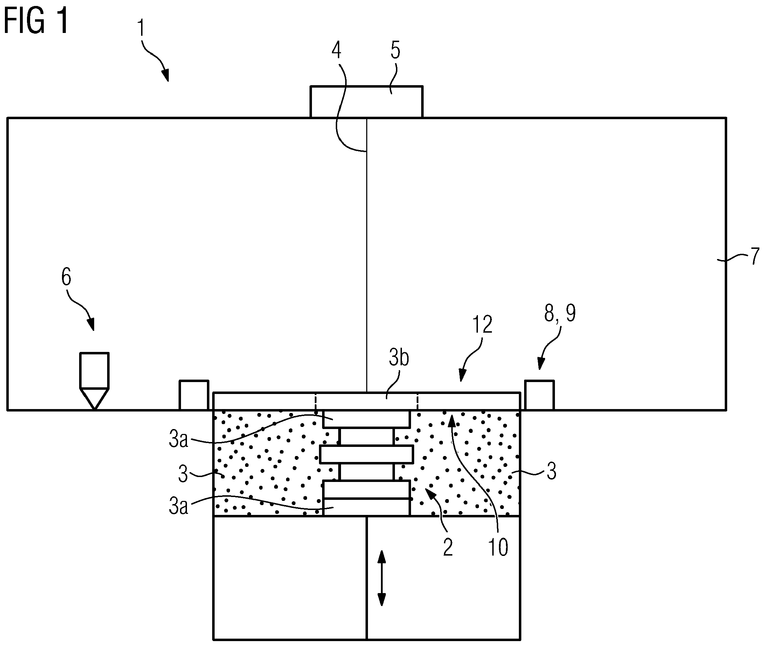

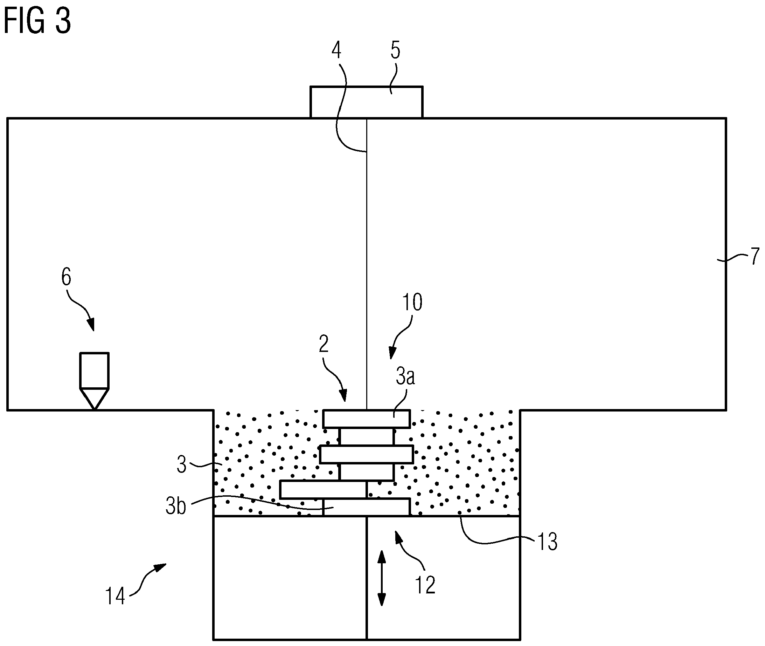

Fig. 1 - 3 each show an additive manufacturing apparatus 1 according to an exemplary embodiment. The additive manufacturing apparatus 1 is configured to additively manufacture three-dimensional objects 2, e.g. technical components or component assemblies, by means of successive layerwise selective irradiation and accompanying consolidation of layers of a build material 3 which can be consolidated by means of an energy beam 4, e.g. a laser beam. The apparatus 1 can be a selective laser melting apparatus, for instance. The apparatus 1 can be part of a plant comprising a plurality of respective apparatuses 1 for additively manufacturing three-dimensional objects 2.

The apparatus 1 comprises a number of functional units which are used during its operation for additively manufacturing three-dimensional objects 2. An exemplary functional unit is an irradiation device 5, particularly an energy beam generating device and/or an energy beam deflecting device, e.g. a scanning device, which serves for selectively irradiating a build material layer with an energy beam 4. Another exemplary functional unit is a build material application device 6, particularly a coating device, serving for applying a layer of powdered build material 3 in a build plane of a process chamber 7 of the apparatus 1.

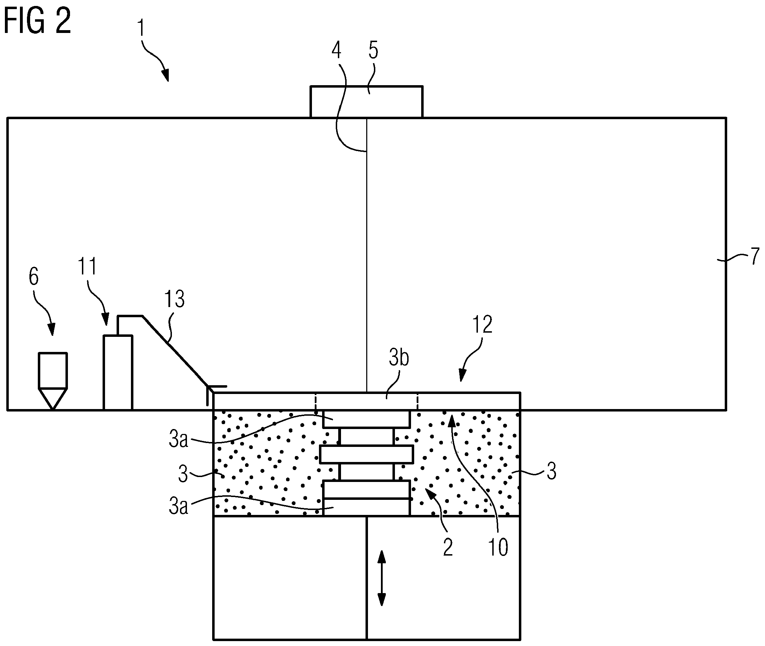

The apparatuses 1 of Fig. 1, 2 each comprise a device 8 to arrange a foil-like planar element 12 in the build plane 10. The apparatus 1 of Fig. 1 comprises a device 8, i.e. an endless supply or conveyor device 9, to arrange a foil-like planar element 12 in the build plane 10. The energy beam 4 used to selectively irradiate and consolidate build material 3 can also be used to cut distinct portions of foil-like material from the foil-like build material as supplied or conveyed from the endless supply or conveyor device 9.

The apparatus 1 of Fig. 2 comprises a device 8, i.e. a handling device 11 such as a robot, to arrange a foil-like planar element 12 in the build plane 10. The handling device 11 may comprise a number of handling elements 13, e.g. robot axes, which may be moveably supported with respect to a base of the handling device 11. At least one handling element 13 allows for grasping a foil-like planar element 12. Of course, respective handling elements 13 can be provided with other functionalities.

Both the endless supply or conveyor device 9 and the handling device 11 can be disposed within the process chamber 7 the additive manufacturing apparatus 1. Both the endless supply or conveyor device 9 and the handling device 11 can be moveably supported in at least one degree of freedom of motion so that it can be moved to a position allowing for arranging a foil-like planar element 12 in the build plane 10.

The apparatuses 1 are thus, configured to execute a method for additively manufacturing three-dimensional objects 2 which is characterized in that at least one layer of build material 3 which is to be successively layerwise selectively irradiated and consolidated is at least partly provided as a foil-like planar element 12 of a build material 3 which can be consolidated by means of an energy beam 4. Hence, the method does not only comprise selectively irradiating and consolidating of layers 3a of a powdered build material 3 in order to additively build-up the three-dimensional object 2, but also comprises selectively irradiating and consolidating of layers 3b of a non-powdered build material 3, i.e. a foil-like planar element 12 made of a build material 3 which can be consolidated by an energy beam 4, in order to additively build-up the three-dimensional object 2. The foil-like planar element 12 is a metal foil, i.e. generally a planar structural component which can be handled, i.e. particularly grabbed, by all kinds of handling devices, e.g. robots and the like.

Hence, the method uses at least two different kinds of build material 3 which is to be successively layerwise selectively irradiated and consolidated in order to additively build-up the three-dimensional object 2, namely a powdered build material and a non-powdered build material, i.e. the foil-like planar element 12. Layers of build material 3 which are not provided as a foil-like planar element 12 are provided as a powder layer of a powdered build material 3 and vice versa.

Hence, during the additive build-up of the three-dimensional object 2 according to the method, not only powder layers of build material 3 are applied in the build plane 10 and selectively irradiated, but also non-powder layers, i.e. foil-like planar elements 12, are arranged in the build plane 10 and selectively irradiated and consolidated.

As is discernible from the Fig., the foil-like planer element 12 which is to be selectively irradiated and consolidated is arranged on top of at least one powdered build material layer 3a which has been previously selectively irradiated and consolidated. Likewise, a powdered build material layer 3a which is to be selectively irradiated and consolidated can/will be arranged on top of the foil-like planer element 12 which has been previously selectively irradiated and consolidated in a next consolidation step.

A respective foil-like planar element 12 may extend across the entire build plane 10, i.e. the dimensions of the foil-like planar element 12 may correspond to the dimensions of the build plane 10. However, it is also possible that the dimensions of the foil-like planar element 12 may be smaller or bigger than the dimensions of the build plane 10.

As is discernible from Fig. 2, a foil-like planar element 12 can be provided as a blank or cutting, e.g. as a blanked or stamped part, at least partly covering the build plane 10. In this regard, it is also conceivable that a respective blank or cutting is tailored, i.e. already has the cross-sectional shape of the cross-section of the three-dimensional object 2 to be additively built in the respective plane or cross-section of the three-dimensional object 2. For an example of a circular cross-sectional shape of a cross-section of the three-dimensional object 2, a blank or cutting may also have a corresponding circular shape.

The build material 3 forming the foil-like planar element 12 may be different compared with the powdered build material 3, i.e. the build material 3 which is not provided as foil-like planar element 12. Hence, the three-dimensional object 2 can be deliberately provided with locally differing object properties, e.g. locally differing electrical, mechanical, or thermal properties, by means of selective consolidation of different build materials. In such a manner, composite objects 2 can be additively manufactured (without compromising the powdered build material).

The energy beam 4 used for consolidating respective layers or layer portions of powdered build material 3 can have the same, similar or different energy beam properties, e.g. energy beam intensity, energy beam focus size, energy beam velocity, etc., as the energy beam 4 used for consolidating respective layers or layer portions of non-powdered build material, i.e. foil-like planar element 12. Hence, the same, a similar or different energy beam can be used for consolidating layers or layer portions of powdered build material and layers or layer portions of non-powdered build material, i.e. foil-like planar element 12.

In order to assure a proper additive build-up of the three-dimensional object 2, a respective foil-like planar element 12 is typically, selectively irradiated and consolidated in such a manner that it bonds or connects with previously selectively irradiated and consolidated portions of a preceding layer, which may be a powder layer, of build material 3. Hence, selectively irradiated and consolidated portions of the foil-like planar element 12 are typically, firmly bonded or connected with previously selectively irradiated and consolidated portions of a preceding layer of build material 3. Bonding and connecting of a foil-like planar element 12 with previously selectively irradiated and consolidated portions of a preceding layer of build material typically, encompasses a material fit or material closure, respectively.

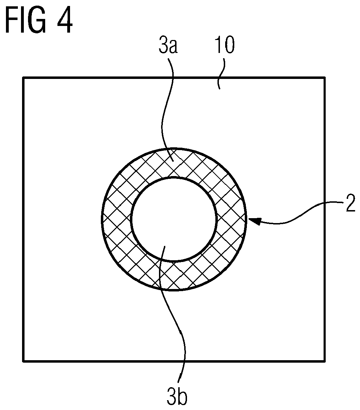

As is discernible from Fig. 4, portions of a foil-like planar element 12 which do not form part of the three-dimensional object 2 which is to be additively built, i.e. portions of the foil-like planar element 12 which are not selectively irradiated and not consolidated, can be removed after selective irradiation and consolidation of the foil-like planar element 12. In Fig. 4, respective portions of the foil-like planar element 12 which have been removed are indicated by the hatching. Removal of the respective portions of the foil-like planar element 12 can be done by an appropriate handling device, e.g. a robot, which may cut and/or grasp the portions of the foil-like planar element 12 which are to be removed. Removal of the respective portions of the foil-like planar element 12 is typically, done before the next layer of build material 3, which can be a powdered build material layer or a non-powdered build material layer, is arranged in the build plane 10. The energy beam 4 used to selectively irradiate and consolidate build material 3 can, if need be, also be used to cut distinct portions of foil-like material 12 which are to be removed.

After removal of not selectively irradiated and not consolidated portions of a foil-like planar element 12, a powdered build material 3 can be applied to areas from which the not selectively irradiated and not consolidated portions of the foil-like planar element 12 have been removed. Hence, the free space(s) left after removing the respective portions of the foil-like planar element can be filled with a powdered build material 3 so that both non-powdered build material and powdered build material is present in the same plane.

In such a manner, it is possible that a plane, i.e. typically a cross-section, of the three-dimensional object 2 which was additively manufactured in accordance with the method comprises consolidated portions of a powdered build material and consolidated portions of a non-powdered build material. In Fig. 4, consolidated portions (see the ring-like portion surrounding the circular portion in the center) of a powdered build material 2 are indicated by the cross-hatching and consolidated portions of a non-powdered build material are indicated by no hatching (see the circular portion in the center). As mentioned above, powdered build material and a non-powdered build material can be (chemically) different materials so that it is possible that a plane of the three-dimensional object 2 which was manufactured in accordance with the method comprises different object properties, e.g. different electrical, mechanical or thermal properties.

The exemplary embodiment of Fig. 4 refers to an embodiment in which a foil-like planar element 12 which is to be selectively irradiated and consolidated is (directly) arranged/disposed on top of a build platform 13 of a build module 14 or build chamber, respectively of the apparatus 1.The build platform 13 is typically moveably supported in at least one degree of freedom, e.g. along a vertically orientated axis of motion. In this embodiment, the foil-like planar element 12 can be selectively irradiated and consolidated, whereby selectively irradiated and consolidated portions of the foil-like planar element 12 are connected with the build platform 13. The foil-like planar element 12 can act as a supporting structure for supporting the object 2 which is to be additively manufactured. When the material properties, e.g. the mechanical and/or thermal properties, of the foil-like planar element 12 differ from the material properties of the build platform 13, the foil-like planar element 12 and the additively manufactured object 2 built on top of the foil-like planar element 12 can be easily removed from the build platform 13. In analogous manner, removal of the supporting structure from the object 2 can be eased when the material properties, e.g. the mechanical and/or thermal properties, of the foil-like planar element 12 differ from the material properties of the object 2 to be additively manufactured.

## Claims

1. Method for additively manufacturing of three-dimensional objects (2) by means of successive layerwise selective irradiation and consolidation of layers of a build material (3) which can be consolidated by means of an energy beam (4), **characterized in that**
at least one layer of build material (3) which is to be selectively irradiated and consolidated is at least partly provided as a foil-like planar element (12) of a build material (3) which can be consolidated by means of an energy beam (4).

2. Method according to Claim 1, **wherein** a metal foil or a sheet metal is used as a foil-like planar element (12).

3. Method according to Claim 1 or 2, **wherein** layers (3a) of build material (3) which are not provided as a foil-like planar element (12) are provided as a powder layer of a powdered build material (3).

4. Method according to any of the preceding Claims, **wherein** the foil-like planar element (12) is selectively irradiated and consolidated, whereby selectively irradiated and consolidated portions of the foil-like planar element (12) are connected with previously selectively irradiated and consolidated portions of a preceding layer of build material (3).

5. Method according to any of the preceding Claims, **wherein** the foil-like planar element (12) is selectively irradiated and consolidated, whereby selectively irradiated and consolidated portions of the foil-like planar element (12) are connected with a build platform of a build module.

6. Method according to any of the preceding Claims, **wherein** not selectively irradiated and not consolidated portions of a foil-like planar element (12) are removed during and/or after selective irradiation and consolidation of the foil-like planar element (12).

7. Method according to Claim 6, **wherein** after removal of not selectively irradiated and not consolidated portions of a foil-like planar element (12), a powdered build material (3) is applied to areas from which the not selectively irradiated and not consolidated portions of the foil-like planar element (12) have been removed.

8. Method according to Claim 7, **wherein** the powdered build material (3) is selectively irradiated and consolidated by means of an energy beam (4).

9. Method according to any of the preceding Claims, **wherein** the build material (3) forming the foil-like planar element (12) is different to the build material of a layer of build material (3) which is not provided as foil-like planar element (12).

10. Method according to any of the preceding Claim, **wherein** the foil-like planar element (12) is provided from an endless supply device (9).

11. Method according to any of the preceding Claims, **wherein** the foil-like planar element (12) is provided as a blank or cutting at least partly covering the build plane (10) in which the selective irradiation and consolidation of build material (3) takes place.

12. Method according to any of the preceding Claims, **wherein** the foil-like planar element (12) is provided in a pre-heated state.

13. Apparatus (1) for additively manufacturing of three-dimensional objects (2) by means of successive layerwise selective irradiation and consolidation of layers of a build material (3) which can be consolidated by means of an energy beam (4), **characterized in that** the apparatus (1) is configured to execute the method according to any of the preceding Claims.
